# EUROPÄISCHE PATENTSCHRIFT

(11) **EP 2 664 562 B1**
(45) Veröffentlichungstag und Bekanntmachung des Hinweises auf die Patenterteilung: **18.03.2015**
(21) Anmeldenummer: 12169029.1
(22) Anmeldetag: 23.05.2012
(51) Int. Cl.: B65G 19/14, B65G 19/26

(54) **Mitnehmer, Zugelement und Fördereinrichtung zur Förderung von Schüttgut**
Transport device, actuator and traction device for transporting bulk goods
Entraîneur, élément de traction et convoyeur destinés au transport de produits en vrac

(30) Priorität: 15.05.2012 EP 12168076
(43) Veröffentlichungstag der Anmeldung: 20.11.2013
(73) Patentinhaber: Bühler GmbH, 92339 Beilngries (DE)
(72) Erfinder: KAMPS, Rolf, 4412 Nugler (CH); EGGERT, Dominik, 8050 Zürich (CH); WERNER, Uwe, 8825 Hütten (CH)
(74) Vertreter: Vossius & Partner

(56) Entgegenhaltungen:
- EP-A1- 0 005 498
- GB-A- 415 063
- GB-A- 510 837

## Beschreibung

Die Erfindung betrifft einen Mitnehmer, ein Zugelement, eine Fördereinrichtung und ein Verfahren zur Förderung von Schüttgut sowie ein Verfahren zur Aufrüstung und/oder Umrüstung einer Fördereinrichtung gemäss den Oberbegriffen der unabhängigen Ansprüche (siehe z.B. GB 415063 A).

Derartige Fördereinrichtungen geeignet zur Förderung von Schüttgut wie beispielsweise Reis entlang unter anderem gekrümmter Rohre von einem Einlass für das Schüttgut zu einem Auslass für das Schüttgut sind aus dem Stand der Technik als Rohrkettenförderer bzw. Stauscheibenförderer bekannt.

Aus der US 4,197,938 ist ein Förderer für Schüttgut umfassend scheibenartige Mitnehmer bekannt. Die Mitnehmer sind an einem Seil angeordnet, wobei das Seil umfassend die Mitnehmer mittels eines Zahnrads antreibbar ist zur Förderung des Schüttguts unter anderem entlang gekrümmter Rohrabschnitte von einem Einlass zu einem Auslass.

Diese vorbekannte Fördereinrichtung für Schüttgut weist den Nachteil auf, dass die Mitnehmer im Betrieb verkanten können, was zu einer Unterbrechung der Förderung des Schüttguts führen kann. Dies kann die Wartungskosten erhöhen und den Durchsatz an Schüttgut durch die Fördereinrichtung verringern. Zudem wird hierdurch unter Umständen der Verschleiss erhöht, was eine Verkürzung von Wartungsintervallen sowie einen häufigeren Austausch von Verschleissteilen notwendig macht, was die Kosten ebenfalls erhöht.

Es ist daher eine Aufgabe der vorliegenden Erfindung, die Nachteile des Bekannten zu vermeiden, insbesondere also einen Mitnehmer, ein Zugelement und eine Fördereinrichtung sowie ein Verfahren bereitzustellen, mit denen ein zuverlässiger Betrieb der Fördereinrichtung ermöglicht wird, wobei die Fördereinrichtung einem geringen Verschleiss unterliegt und im Betrieb wartungsarm und kostengünstig ist. Eine zusätzliche Aufgabe der vorliegenden Erfindung ist die Bereitstellung eines Verfahrens zur Aufrüstung und/oder Umrüstung einer installierten Fördereinrichtung, derart, dass diese im Betrieb zuverlässiger, wartungsarm und kostengünstig wird.

Diese Aufgaben werden durch einen Mitnehmer, ein Zugelement, eine Fördereinrichtung sowie Verfahren gemäss den unabhängigen Ansprüchen gelöst.

Der erfindungsgemässe Mitnehmer ist geeignet zur Anordnung an einem Zugelement zur Förderung von Schüttgut in einer Fördereinrichtung. Die Fördereinrichtung umfasst einen Förderkanal und insbesondere ein Förderrohr. Der Mitnehmer umfasst weiter eine Mitnehmerfläche zur Förderung des Schüttguts und eine Befestigungseinrichtung zur Anordnung des Mitnehmers am Zugelement. Die Befestigungseinrichtung ist bei bestimmungsgemässem Gebrauch des Mitnehmers in Förderrichtung des Schüttguts stromabwärts der Mitnehmerfläche angeordnet. Der Mitnehmer ist seitlich zur Förderrichtung auslenkbar.

Unter einem "Mitnehmer" wird im Sinne der vorliegenden Anmeldung eine Einrichtung verstanden, welche an einem Zugelement anordenbar ist, wobei bei bestimmungsgemässem Gebrauch ein flächiger Abschnitt des Mitnehmers zur Zugachse des Zugelements so angeordnet ist, das Schüttgut entlang der Zugachse förderbar ist. Insbesondere ist der Mitnehmer in einem Hohlkörper wie beispielsweise einem Förderrohr anordenbar und entlang der Achse des Hohlkörpers positionierbar zur Förderung von Schüttgut entlang der Achse des Hohlkörpers.

Unter einem "Zugelement" wird im Sinne der vorliegenden Anmeldung insbesondere eine Kette, ein Kabel, ein Riemen oder ein Seil oder beliebige Kombinationen daraus verstanden, an dem entlang der Längsachse beabstandet voneinander Mitnehmer anordenbar sind.

Unter dem Begriff "Schüttgut" wird im Sinne der vorliegenden Anmeldung ein körniges, mehliges oder auch stückiges Gut verstanden, das in einer schüttfähigen Form vorliegt und insbesondere fliessfähig ist. Insbesondere werden als Schüttgut Reis, Mehl, Korn, fliessfähige, pulvrige Substanzen und beliebige Kombinationen daraus verstanden.

Unter einer "Fördereinrichtung" wird im Sinne der vorliegenden Anmeldung eine Einrichtung zur insbesondere kontinuierlichen Förderung von Schüttgut verstanden. Unter einer "kontinuierlichen Förderung" von Schüttgut wird im Sinne der vorliegenden Anmeldung insbesondere auch eine derartige Förderung von Schüttgut verstanden, bei der der Schüttgutstrom im Förderkanal abschnittsweise durch Mitnehmer unterbrochen ist.

Unter der Bezeichnung "A und/oder B" werden im Sinne der vorliegenden Anmeldung die folgenden möglichen Kombinationen verstanden: A; B; A und B; A und kein B; B und kein A.

Unter einem "Förderkanal" wird im Sinne der vorliegenden Anmeldung ein Kanal verstanden, entlang dessen Längsachse Schüttgut förderbar ist. Beispielsweise kann ein Förderkanal als offene Rinne oder als Hohlkörper mit kreisförmigem oder eckigem Querschnitt ausgebildet sein. Insbesondere ist der Förderkanal als Förderrohr mit kreisförmigem Querschnitt senkrecht zur Längsachse des Förderrohrs ausgebildet.

Unter einer "Befestigungseinrichtung" wird im Sinne der vorliegenden Anmeldung eine Einrichtung zur Fixierung des Mitnehmers am Zugelement verstanden. Insbesondere ist der Mitnehmer mittels Kraftschluss zwischen der Befestigungseinrichtung und dem Zugelement am Zugelement fixierbar. Beispielsweise kann eine Befestigungseinrichtung als eine Verschraubungseinrichtung, als eine Klemmeinrichtung, als eine Verschweissung, als eine Verklebung oder als beliebige Kombinationen daraus ausgebildet sein. Insbesondere kann der Mitnehmer einstückig mit der Befestigungseinrichtung ausgebildet sein.

Optional kann der Mitnehmer zweistückig mit der Befestigungseinrichtung ausgebildet sein, insbesondere mittels einer Klippverbindung und / oder einer Schraubverbindung zwischen Mitnehmer und Befestigungseinrichtung; dies hat den Vorteil, dass der dem Verschleiss unterliegende Mitnehmer einfach austauschbar ist zur Verringerung des Wartungsaufwandes.

Unter der "Förderrichtung" wird im Sinne der vorliegenden Anmeldung die Richtung verstanden, in der das Schüttgut im Mittel entlang des Förderkanals in der Fördereinrichtung gefördert wird, insbesondere in einem Abschnitt entlang des Förderkanals, beispielsweise von einem Einlass für das Schüttgut in die Fördereinrichtung zu einem Auslass für das Schüttgut aus der Fördereinrichtung.

Unter einer "seitlichen Auslenkbarkeit zur Förderrichtung" des Mitnehmers wird im Sinne der vorliegenden Anmeldung eine Auslenkung um den Mittelpunkt der Befestigungseinrichtung im Wesentlichen senkrecht zur Längsachse des Förderkanals verstanden. Der Mittelpunkt der Befestigungseinrichtung wird bestimmt bezogen auf die Länge der Befestigungseinrichtung entlang des Zugelements.

Unter einer "Mitnehmerfläche" des Mitnehmers wird im Sinne der vorliegenden Anmeldung diejenige Fläche verstanden, die im Wesentlichen die Förderung des Schüttguts in der Fördereinrichtung bewirkt.

Insbesondere ist der Mitnehmer als schleppender Mitnehmer ausgebildet.

Die Ausbildung des Mitnehmers mit einer seitlichen Auslenkbarkeit zur Förderrichtung durch Anordnung der Befestigungseinrichtung stromabwärts der Mitnehmerfläche hat den Vorteil, dass im Betrieb in einer Fördereinrichtung die Wahrscheinlichkeit eines Verkantens insbesondere in gebogenen Abschnitten des Förderkanals verringert wird. Hierdurch wird der Verschleiss am Mitnehmer reduziert, wodurch sich die Kosten für den Betrieb der Fördereinrichtung vermindern. Zudem können die Wartungsintervalle verlängert werden.

Bevorzugt weist der Mitnehmer einen Auslenkungsbegrenzer auf, der bevorzugt auf der der Mitnehmerfläche abgewandten Seite angeordnet ist.

Dies hat den Vorteil der Begrenzung der Auslenkbarkeit des Mitnehmers derart, dass eine zuverlässige und effiziente Förderung von Schüttgut ermöglicht wird und die Wahrscheinlichkeit einer Beschädigung des Mitnehmers durch eine zu starke Auslenkung minimiert wird.

Besonders bevorzugt ist der Auslenkungsbegrenzer als sich entgegen der Förderrichtung öffnender Trichter ausgebildet ist, der insbesondere zumindest abschnittsweise konisch oder zumindest abschnittsweise trompetenförmig ausgebildet ist. Mit anderen Worten wird das Zugelement im Trichter geführt.

Dies hat den Vorteil der konstruktiv einfachen Ausgestaltung des Mitnehmers mit einer hohen Zuverlässigkeit im Betrieb, was kostengünstig ist und die Wahrscheinlichkeit einer Beschädigung des Mitnehmers minimiert.

Bevorzugt ist die Mitnehmerfläche bei bestimmungsgemässem Gebrauch im Wesentlichen senkrecht zur Förderrichtung des Schüttguts angeordnet und weist eine grösste Ausdehnung d auf.

Unter einer "im Wesentlichen senkrechten Anordnung" der Mitnehmerfläche zur Förderrichtung des Schüttguts wird im Sinne der vorliegenden Anmeldung eine derartige Ausrichtung des Mitnehmers im Förderkanal verstanden, bei der der Mitnehmer mittels der Mitnehmerfläche Schüttgut in Förderrichtung fördern kann. Mit anderen Worten umfasst diese Formulierung auch Auslenkungen, insbesondere im Bereich von ± 10°, zur senkrechten zwischen Mitnehmerfläche und Förderrichtung.

Unter der "grössten Ausdehnung der Mitnehmerfläche" wird im Sinne der vorliegenden Anmeldung die grösste Dimension der Mitnehmerfläche im Wesentlichen senkrecht zur Förderrichtung verstanden. Beispielsweise ist bei kreisförmiger Ausbildung der Mitnehmerfläche die grösste Dimension der Durchmesser der Mitnehmerfläche und beispielsweise bei elliptischer Ausbildung die längere Hauptachse der Ellipse.

Diese Anordnung der Mitnehmerfläche zur Förderrichtung hat den Vorteil, dass eine effiziente Förderung des Schüttguts erzielbar ist mittels des Mitnehmers und die Wahrscheinlichkeit eines Verkantens des Mitnehmers im Förderkanals verringert wird, beispielsweise durch eine im Wesentlichen gleichmässige Belastung des Mitnehmers durch Schüttgut.

Besonders bevorzugt ist die Befestigungseinrichtung stromabwärts der Mitnehmerfläche mit einem Befestigungsabstand a entlang des Zugelements von der Mitnehmerfläche angeordnet bezogen auf den Schnittpunkt der mittleren Mitnehmerfläche und der Zugachse des Zugelements. Der Befestigungsabstand a ist zumindest grösser als 25% der grössten Ausdehnung d der Mitnehmerfläche. Bevorzugt ist der Befestigungsabstand a zumindest grösser als 50% und besonders bevorzugt grösser als 75% der grössten Ausdehnung d der Mitnehmerfläche.

Unter der "mittleren Mitnehmerfläche" wird im Sinne der vorliegenden Anmeldung die durch den grössten Umfang der Mitnehmerfläche umschlossene Fläche verstanden. Beispielsweise ist die mittlere Fläche bei Ausbildung des Mitnehmers als Scheibe der grösste Umfang der Umfang der Scheibe; bei Ausbildung des Mitnehmers als Kegelstumpf ist der grösste Umfang der Umfang des Kegelstumpfs mit dem grössten Durchmesser, wodurch die mittlere Mitnehmerfläche definiert wird; es wird eine parallele Anordnung der mittleren Flächensenkrechten auf der Mitnehmerfläche zur Zugachse angenommen.

Die beabstandete Anordnung der Befestigungseinrichtung zumindest grösser als 25% der grössten Ausdehnung der Mitnehmerfläche hat den Vorteil der weiteren Verminderung der Wahrscheinlichkeit einer Verkantung des Mitnehmers im Betrieb, wodurch Wartungskosten und Ersatzteilkosten weiter verringert werden und damit der Betrieb kostengünstiger wird.

Ganz besonders bevorzugt ist der Befestigungsabstand a kleiner als 150%, bevorzugt kleiner als 125%, und besonders bevorzugt kleiner als 100% der grössten Ausdehnung d.

Dies hat den Vorteil, dass die Wahrscheinlichkeit einer Verkantung des Mitnehmers in dem Förderkanal im Betrieb weiter verringert wird. Ein weiterer Vorteil ist die Möglichkeit der Anordnung von Mitnehmern in einem geringen Abstand zur Optimierung der Förderleistung.

Bevorzugt ist die Befestigungseinrichtung derart ausgestaltet, dass die Befestigungseinrichtung mittels einer Antriebseinrichtung der Fördereinrichtung greifbar ist.

Im Sinne der vorliegenden Anmeldung wird unter einer "Antriebseinrichtung" eine derartige Einrichtung verstanden, mit der eine Zugkraft auf das Zugelement ausübbar ist zur Positionierung bzw. Bewegung der am Zugelement angeordneten Mitnehmer zur Förderung von Schüttgut im Förderkanal. Beispielsweise kann die Antriebseinrichtung als Zahnkranz ausgebildet sein, in den die Mitnehmer eingreifen können, wobei durch Rotation des Zahnkranzes das Zugelement mit Mitnehmern bewegbar ist.

Die Ausgestaltung der Befestigungseinrichtung derart, dass diese mit einer Antriebseinrichtung greifbar ist, hat den Vorteil, dass die Aufbringung einer Zugkraft zur Positionierung des Zugelements mit Mitnehmer im Wesentlichen parallel zur Zugachse erfolgt, was die Wahrscheinlichkeit eines Verkantens der Mitnehmer minimiert. Weiterhin wird die Aufbringung der Zugkraft auf den Mitnehmer zur Bewegung verringert oder gänzlich eliminiert, was die Wahrscheinlichkeit von Beschädigungen des Mitnehmers verringert. Zudem wird der Verschleiss am Mitnehmer verringert, was gesamthaft die Betriebskosten durch grössere Wartungsintervalle und weniger Materialverschleiss insbesondere durch weniger Reibung verringert.

Ein weiterer Aspekt der vorliegenden Erfindung betrifft ein Zugelement umfassend zumindest einen Mitnehmer wie oben beschrieben. Bevorzugt umfasst das Zugelement zumindest zwei Mitnehmer. Das Zugelement ist als Seil, Kabel, Riemen oder Kette oder beliebigen Kombinationen daraus ausgebildet.

Dies hat den Vorteil der Anpassbarkeit des Zugelements an die jeweiligen Anforderungen im Hinblick auf Hygiene, Verunreinigung, Zugfestigkeit, Verschleissanfälligkeit und Kosten.

Bevorzugt ist das Zugelement derart ausgestaltet, dass dieses mittels einer Antriebseinrichtung einer Fördereinrichtung greifbar ist.

Dies hat den Vorteil der Verringerung der auf die Mitnehmer aufzubringenden Kräfte zur Förderung des Schüttguts, was den Verschleiss der Mitnehmer verringert. Somit kann eine Vergrösserung der Wartungsintervalle und ein geringerer Verschleiss im Betrieb erzielt werden, was zu geringeren Kosten im Betrieb führt.

Besonders bevorzugt ist das Zugelement als Stahlseil und/oder als Polyethylenseil ausgebildet. Insbesondere ist das Zugelement als ultrahochmolekulares Polyethylenseil ausgebildet.

Ultrahochmolekulare Polyethylene sind dem Fachmann bekannt.

Die Verwendung eines Stahlseils oder eines Polyethylenseils als Zugelement hat sich in der Praxis als kostengünstig und zuverlässig erwiesen.

Ein weiterer Aspekt der vorliegenden Erfindung betrifft eine Fördereinrichtung umfassend zumindest ein Zugelement wie oben beschrieben und zumindest einen Mitnehmer wie oben beschrieben. Die Fördereinrichtung umfasst bevorzugt zumindest zwei Mitnehmer wie oben beschrieben. Weiter umfasst die Fördereinrichtung einen Förderkanal und eine Antriebseinrichtung zum Antrieb des Zugelements zur Förderung von Schüttgut von einem Einlass zu einem Auslass.

Die Fördereinrichtung umfasst den oben beschriebenen Mitnehmer und das oben beschriebene Zugelement und weist deshalb die entsprechenden Vorteile auf.

Bevorzugt ist der Förderkanal als Hohlkörper und insbesondere als Förderrohr ausgebildet. Das zumindest eine Zugelement mit dem zumindest einen Mitnehmer ist im Hohlkörper angeordnet und mittels der Antriebseinrichtung entlang einer Hohlkörperlängsachse positionierbar.

Dies hat den Vorteil, dass in dem Hohlkörper unter definierten Bedingungen, insbesondere unter Verringerung negativer Umwelteinflüsse, die Förderung von Schüttgut ermöglicht wird.

Insbesondere ist der Förderkanal in zumindest einer Seitenansicht S-förmig ausgebildet. Dies hat den Vorteil, dass eine Platz sparende Anordnung der Fördereinrichtung insbesondere auf lediglich einem Stockwerk ermöglicht wird; im Stand der Technik werden hierfür üblicherweise zwei oder drei Stockwerke benötigt, in denen die Fördereinrichtung angeordnet wird.

Weiter insbesondere ist der Förderkanal in zumindest einer Seitenansicht zumindest abschnittsweise O-förmig, kreisförmig oder elliptisch ausgebildet oder aus beliebigen Kombinationen aus diesen Formen. Dies hat den Vorteil der weiter verbesserten Anpassbarkeit an die Anforderungen der Ausgestaltung des Förderkanals entsprechend den Anforderungen.

Besonders bevorzugt deckt eine mittlere Mitnehmerfläche des Mitnehmers die mittlere Querschnittsfläche des Hohlkörpers zu kleiner 100% ab. Bevorzugt wird der mittlere Förderkanalquerschnitt im Bereich von 50% bis 99.9% und besonders bevorzugt von 80% bis 99,9% abgedeckt. Insbesondere kann eine Abdeckung im Bereich von 85% bis 99,9% liegen, optional im Bereich von 90% bis 99,8% und weiter optional von 92% bis 97%; insbesondere wird die Abdeckung in Abhängigkeit vom zu fördernden Schüttgut gewählt.

Unter der "mittleren Querschnittsfläche des Hohlkörpers" wird im Sinne der vorliegenden Anmeldung der Mittelwert der Querschnittsflächen senkrecht zur Hohlkörperlängsachse verstanden, durch den bei bestimmungsgemässem Gebrauch Schüttgut gefördert wird.

Diese Ausgestaltung der mittleren Mitnehmerfläche des Mitnehmers im Verhältnis zur mittleren Querschnittsfläche des Hohlkörpers hat den Vorteil, dass eine Förderung von Schüttgut entlang gekrümmter Abschnitte des Hohlkörpers ermöglicht wird mit geringem Risiko einer Verkantung des Mitnehmers im Hohlkörper. Zudem wird durch die hohe Abdeckungsrate der mittleren Querschnittsfläche durch die mittlere Mitnehmerfläche eine zuverlässige und effiziente Förderung von Schüttgut entlang des Hohlkörpers durch den Mitnehmer erreicht.

Ganz besonders bevorzugt ist der Mitnehmer derart ausgestaltet, dass bei bestimmungsgemässem Gebrauch zumindest in einem horizontal zur Schwerkraftrichtung angeordneten Abschnitt des Förderkanals der Mitnehmer an zumindest zwei in Umfangsrichtung der Mitnehmerfläche voneinander beabstandeten Bereichen am Förderkanal ohne Schüttgut anliegt. Mit anderen Worten liegt der Mitnehmer in einem horizontalen Abschnitt des Förderkanals auf der Innenwand des Förderkanals auf, da der Mitnehmer insbesondere am Zugelement so befestigt ist, dass der Mitnehmer auslenkbar ist.

Unter einer "horizontalen Anordnung" eines Abschnitts des Förderkanals wird im Sinne der vorliegenden Anmeldung eine Anordnung im Wesentlichen senkrecht zur Wirkung der Schwerkraft verstanden.

Die Ausgestaltung des Mitnehmers derart, dass dieser an zumindest zwei in Umfangsrichtung voneinander beabstandeten Bereichen im Förderkanal anliegt, hat den Vorteil, dass geringere Reibungskräfte zwischen Förderkanal und Mitnehmer auftreten, was den Verschleiss des Mitnehmers im Betrieb verringert.

Bei Ausbildung des Förderkanals als Förderrohr hat dies den Vorteil, dass der Mitnehmer nicht am tiefsten Punkt des Förderrohrquerschnitts in Schwerkraftrichtung aufliegt und dadurch ein Verkippen des Mitnehmers durch Verringerung der Hebelkräfte auf den Mitnehmer minimiert wird.

Bevorzugt sind der Förderkanal als Förderrohr mit im Wesentlichen kreisförmigem Querschnitt und der äussere Umfang der Mitnehmerfläche kreisförmig ausgebildet; im Betrieb bei Anordnung des Mitnehmers in einem horizontalen Abschnitt des Förderkanals wird der Mitnehmer seitlich ausgelenkt durch die Schwerkraftwirkung; die seitliche Auslenkung des Mitnehmers führt dazu, dass kung; die seitliche Auslenkung des Mitnehmers führt dazu, dass der Mitnehmer an zumindest zwei in Umfangsrichtung der Mitnehmerfläche voneinander beabstandeten Bereichen am Förderkanal ohne Schüttgut zumindest abschnittsweise entlang des Förderkanals anliegt.

Optional können der Förderkanal als Förderrohr mit im Wesentlichen kreisförmigem Querschnitt und der äussere Umfang der Mitnehmerfläche elliptisch ausgebildet sein; dies hat den Vorteil der Sicherstellung, dass zumindest in einem horizontal angeordneten Abschnitt des Förderkanals der Mitnehmer an zumindest zwei in Umfangsrichtung voneinander beabstandeten Bereichen am Förderkanal anliegt und somit wie vorstehend beschrieben die Wahrscheinlichkeit eines Verkippens des Mitnehmers im Betrieb minimiert wird.

Ein weiterer Aspekt der vorliegenden Erfindung betrifft eine Zufuhreinrichtung für Schüttgut in einen Einlass in eine Fördereinrichtung umfassend einen Förderkanal mit einer Innenwand. Insbesondere wird die Zufuhreinrichtung mit einem Mitnehmer, einem Zugelement oder einer Fördereinrichtung oder beliebigen Kombinationen daraus wie vorstehend beschrieben verwendet. Das Schüttgut ist im Wesentlichen mittels Schwerkraft in die Fördereinrichtung förderbar. Insbesondere wird die Zufuhreinrichtung an einem im Wesentlichen horizontalen Abschnitt der Fördereinrichtung angeordnet. Der Einlass überstreicht einen Winkelbereich der Innenwand von grösser 0° bis kleiner 180° und/oder kleiner 0° bis grösser -180° bezogen auf die Schwerkraftrichtung. Bevorzugt ist der Winkelbereich grösser 20° bis kleiner 160° und/oder kleiner -20° bis grösser -160°. Besonders bevorzugt ist der Winkelbereich grösser 45° bis kleiner 150° und/oder kleiner -45° bis grösser -150°.

Unter einem "Winkel bezogen auf die Schwerkraftrichtung" wird im Sinne der vorliegenden Anmeldung verstanden, dass die Schwerkraftrichtung einen Winkel von 0° definiert und ein positiver Winkel im Uhrzeigersinn zur Schwerkraftrichtung gemessen wird und ein negativer Winkel im Gegenuhrzeigersinn.

Ein "im Wesentlicher horizontaler Abschnitt" ist im Sinne der vorliegenden Anmeldung ein Abschnitt, der im Wesentlichen senkrecht zur Schwerkraftrichtung angeordnet ist.

Unter einem "Winkelbereich, der die Innenwand überstreicht" wird im Sinne der vorliegenden Anmeldung verstanden, dass der Einlass in die Fördereinrichtung einen Öffnungswinkel überstreicht, gemessen von der Förderkanalachse, d. h. dem Mittelpunkt des Förderkanals. Der Winkelbereich ist als mittlerer Winkelbereich aufzufassen.

Beispielsweise ist also der Einlass, wenn der Einlass in einem im Wesentlichen horizontalen Abschnitt der Fördereinrichtung angeordnet ist, seitlich angeordnet.

Die Anordnung des Einlasses im beanspruchten Winkelbereich hat den Vorteil, dass eine Füllhöhe bzw. ein Füllgrad im Förderkanal entsprechend den Anforderungen einstellbar ist. Der Winkelbereich kann vorteilhaft in Abhängigkeit vom verwendeten Schüttgut gewählt werden.

Beispielsweise kann der Winkelbereich fest eingestellt sein; dies hat den Vorteil, dass der Winkelbereich beispielsweise für ein zu förderndes Schüttgut auf einen optimalen Wert fixierbar ist, was den Betrieb der Fördereinrichtung zuverlässiger macht.

Bevorzugt ist der Winkelbereich einstellbar, insbesondere mittels eines Schiebers.

Beispielsweise kann der Schieber als Drehschieber und/oder als Drehmuffe am Förderkanal und/oder an der Zufuhreinrichtung angeordnet sein.

Die Einstellbarkeit des Winkelbereichs hat den Vorteil, dass in Abhängigkeit von den Anforderungen an die Schüttgutförderung sowie auch in Abhängigkeit vom zu fördernden Schüttgut der Winkelbereich einstellbar ist zur Einstellung des Füllgrads im Förderkanal.

Besonders bevorzugt umfasst die Zufuhreinrichtung einen Umlenkbereich zur Förderung des Schüttguts zum Einlass.

Dies hat den Vorteil, dass das Schüttgut, welches beispielsweise stromabwärts in einem Vorratsbehälter gelagert ist, durch den Umlenkbereich zum Förderkanal förderbar ist, wobei durch den Umlenkbereich die Fördergeschwindigkeit bzw. Förderrate des Schüttguts in den Förderkanal einstellbar ist.

Unter einem "Umlenkbereich" wird im Sinne der vorliegenden Anmeldung eine Umlenkung des Schüttguts von einer Förderrichtung im Wesentlichen parallel zur Schwerkraftrichtung verstanden.

Ganz besonders bevorzugt ist der Umlenkbereich als Umlenkfläche ausgebildet und in einem Umlenkwinkel bezogen auf die Schwerkraftrichtung im Bereich von 30° bis 70° angeordnet. Bevorzugt ist der Umlenkwinkel im Bereich von 40° bis 60°, besonders bevorzugt von 45° bis 55° angeordnet.

Alternativ kann der Umlenkwinkel auch -30° bis -70°, bevorzugt von -40° bis -60° und besonders bevorzugt von -45° bis -55° betragen.

Die Anordnung einer Umlenkfläche im beanspruchten Winkelbereich hat den Vorteil, dass in Abhängigkeit vom verwendeten Schüttgut und der geforderten Flussrate die Menge an zugeführtem Schüttgut einstellbar ist.

Insbesondere ist der Umlenkwinkel einstellbar, was vorteilhaft eine Einstellbarkeit des Umlenkwinkels in Abhängigkeit der jeweiligen Anforderungen erlaubt.

Ein weiterer Aspekt der vorliegenden Erfindung betrifft ein Verfahren zur Förderung von Schüttgut mittels einer Fördereinrichtung umfassend ein Zugelement wie oben beschrieben und/oder zumindest einen Mitnehmer wie oben beschrieben. Insbesondere wird eine Fördereinrichtung wie oben beschrieben verwendet. Das Verfahren umfasst den Schritt der Förderung des Schüttguts von einem Einlass zu einem Auslass.

Bei diesem Verfahren wird ein Mitnehmer und/oder Zugelement wie oben beschrieben verwendet; das Verfahren weist daher die oben beschriebenen Vorteile auf.

Ein zusätzlicher Aspekt der vorliegenden Erfindung betrifft ein Verfahren zum Aufrüsten und/oder Umrüsten einer Fördereinrichtung zur Förderung von Schüttgut. Das Verfahren umfasst den Schritt der Montage zumindest eines Mitnehmers wie oben beschrieben und/oder zumindest eines Zugelements wie oben beschrieben. Insbesondere wird eine Fördereinrichtung wie oben beschrieben hergestellt.

Dies hat den Vorteil, dass eine bereits installierte Fördereinrichtung aufrüstbar und/oder umrüstbar ist mit zumindest einem erfindungsgemässen Mitnehmer und/oder zumindest einem Zugelement, was kostengünstig ist, da keine Installation einer komplett neuen Fördereinrichtung notwendig wird.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen:
- Figur 1:: perspektivische Darstellung einer erfindungsgemässen Fördereinrichtung mit Einlassbehälter und Auslassbehälter;
- Figur 2:: perspektivische Darstellung einer alternativen erfindungsgemässen Fördereinrichtung mit Einlassbehälter und Auslassbehälter;
- Figur 3:: schematische Darstellung eines gekrümmten Abschnitts einer erfindungsgemässen Fördereinrichtung mit Mitnehmer und Zugelement;
- Figur 4:: schematische Darstellung eines Förderkanals mit Schüttgut, erfindungsgemässen Mitnehmern, einem Antrieb und einem Seil als Zugelement;
- Figur 5:: schematische Darstellung einer alternativen erfindungsgemässen Fördereinrichtung mit einem Riemen als Zugelement;
- Figur 6:: schematische Darstellung einer weiteren alternativen erfindungsgemässen Fördereinrichtung mit einer Kette als Zugelement;
- Figur 7:: perspektivische Darstellung einer alternativen erfindungsgemässen Fördereinrichtung mit abschnittsweise gekrümmtem Förderkanal und einer Laschenkette als Zugelement;
- Figur 8:: schematische Darstellung eines Schnitts durch einen erfindungsgemässen Mitnehmer in einem Förderrohr mit zwei Auflagepunkten;
- Figur 9:: Darstellung eines Stahlseils geeignet zur Verwendung als Zugelement gemäss der vorliegenden Erfindung;
- Figur 10:: Darstellung eines ultrahochmolekularen Polyethylenseils geeignet zur Verwendung als Zugelement in einer erfindungsgemässen Fördereinrichtung;
- Figur 11:: Schematische Darstellung einer erfindungsgemässen Zufuhreinrichtung mit einem Förderkanal.

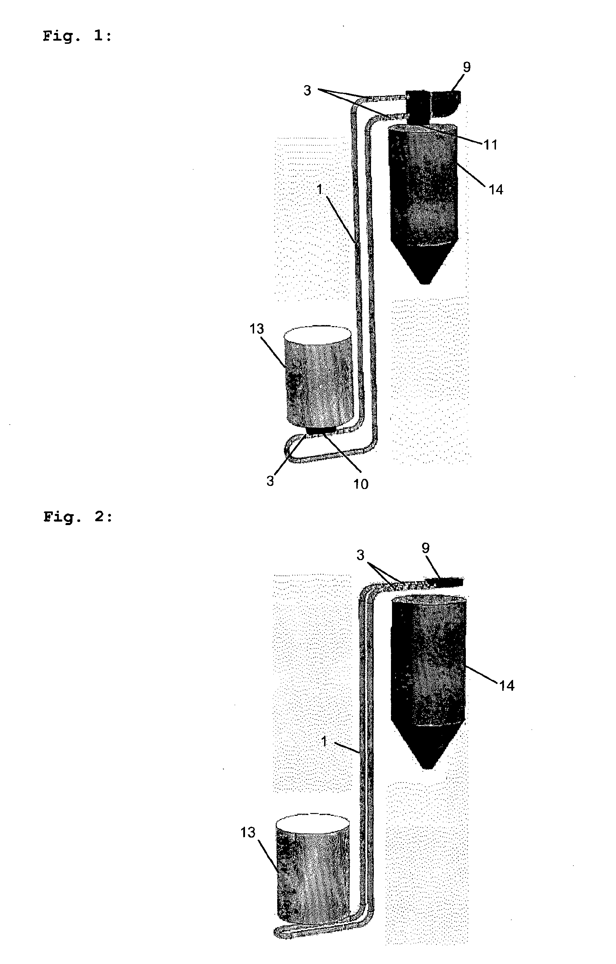

In Figur 1 ist in perspektivischer Darstellung eine erfindungsgemässe Fördereinrichtung 1 für die Förderung von Schüttgut von einem Einlassbehälter 13 zu einem Auslassbehälter 14 dargestellt.

In der Fördereinrichtung 1, die einen als Förderrohr ausgebildeten Förderkanal aufweist, sind Mitnehmer 3 entlang der Förderkanalachse beabstandet zueinander angeordnet. Die Mitnehmer 3 sind jeweils an einem hier nicht dargestellten Zugelement befestigt, welches mittels der Antriebseinrichtung 9 in Bewegung versetzbar ist. Die Mitnehmer 3 führen eine umlaufende Bewegung entlang des Förderkanals der Fördereinrichtung 1 aus. Die horizontal angeordneten Abschnitte der Fördereinrichtung umfassend einen Einlass 10 und einen Auslass 11 sind vertikal voneinander beabstandet angeordnet. Der Förderkanal ist S-förmig ausgebildet.

Im Betrieb wird Schüttgut aus dem Einlassbehälter 13 über den Einlass 10 in die Fördereinrichtung gefördert. Mittels der Mitnehmer 3, die durch den Antrieb 9 in Bewegung versetzt werden, kann das zwischen den Mitnehmern 3 angeordnete Schüttgut zum Auslass 11 gefördert werden, worauf das Schüttgut in den Auslassbehälter 14 fällt.

In Figur 2 ist in perspektivischer Darstellung eine Fördereinrichtung 1 zur Förderung von Schüttgut von einem Einlassbehälter 13 zu einem Auslassbehälter 14 dargestellt. Im Unterschied zur Figur 1 sind hier die horizontalen Abschnitte der Fördereinrichtung horizontal voneinander beabstandet und nicht vertikal wie in Figur 1. Die entsprechende Ausgestaltung der Fördereinrichtung 1 kann entsprechend den Anforderungen an den vorhandenen Platz gewählt werden. Der Förderkanal ist ebenfalls S-förmig ausgebildet.

Gleiche Referenzzeichen bezeichnen gleiche Merkmale in allen Figuren und werden deshalb nur bei Bedarf erneut erläutert.

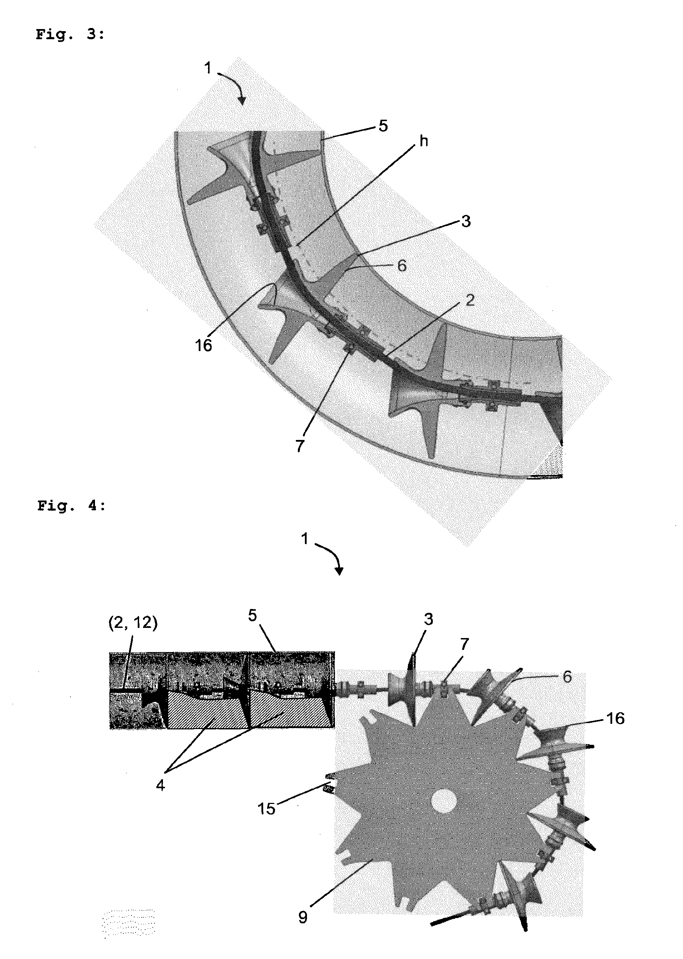

In Figur 3 ist ein Ausschnitt einer Fördereinrichtung 1 mit einem als Förderrohr 5 ausgebildeten Förderkanal dargestellt. Die gestrichelte Hilfslinie h verläuft parallel zur Längsachse des Förderrohrs.

In dem dargestellten Ausschnitt der Fördereinrichtung 1 sind drei Mitnehmer 3 sichtbar, die jeweils mit einer Befestigungseinrichtung 7, die als Schraubverbindung ausgebildet ist, am Zugelement 2 befestigt. Das Zugelement 2 ist als Seil ausgebildet. Der Mitnehmer 3 ist zweistückig mit der Befestigungseinrichtung 7 ausgebildet, wobei der Mitnehmer 3 mittels eines Klippmechanismus an der Befestigungseinrichtung 7 angeordnet ist.

Alternativ ist auch die Verwendung einer Schraubverbindung zwischen Mitnehmer 3 und Befestigungseinrichtung 7 denkbar.

Die Mitnehmer 3 umfassen eine Mitnehmerfläche 6 zur Förderung von Schüttgut im Förderrohr 5.

Ein Auslenkungsbegrenzer 16 ist als sich entgegen der Förderrichtung öffnender Trichter ausgebildet, wobei der Trichter abschnittsweise trompetenförmig ausgebildet ist. Hierdurch wird die Auslenkbarkeit der Mitnehmer 3 begrenzt.

In Figur 4 ist in schematischer Darstellung ein anderer Ausschnitt der Fördereinrichtung gemäss Figur 3 dargestellt.

In dem Förderrohr 5 ist Schüttgut 4 angeordnet, welches mittels der Mitnehmerfläche 6 der Mitnehmer 3 entlang der Fördereinrichtung förderbar ist.

Im Förderrohr 5 stellt das Zugelement 2 die Hohlkörperlängsachse 12 dar.

Das Zugelement 2 kann mittels der hier nur teilweise dargestellten Antriebseinrichtung 9 in Bewegung versetzt werden zur Förderung des Schüttguts 4. Zum Antreiben des Zugelements 2 weist die Antriebseinrichtung 9 eine als Greifeinrichtung 15 ausgebildete Aussparung auf, um die Befestigungseinrichtung 7 zu greifen, wodurch mittels Rotation der Antriebseinrichtung 9 das Zugelement in Bewegung versetzt wird.

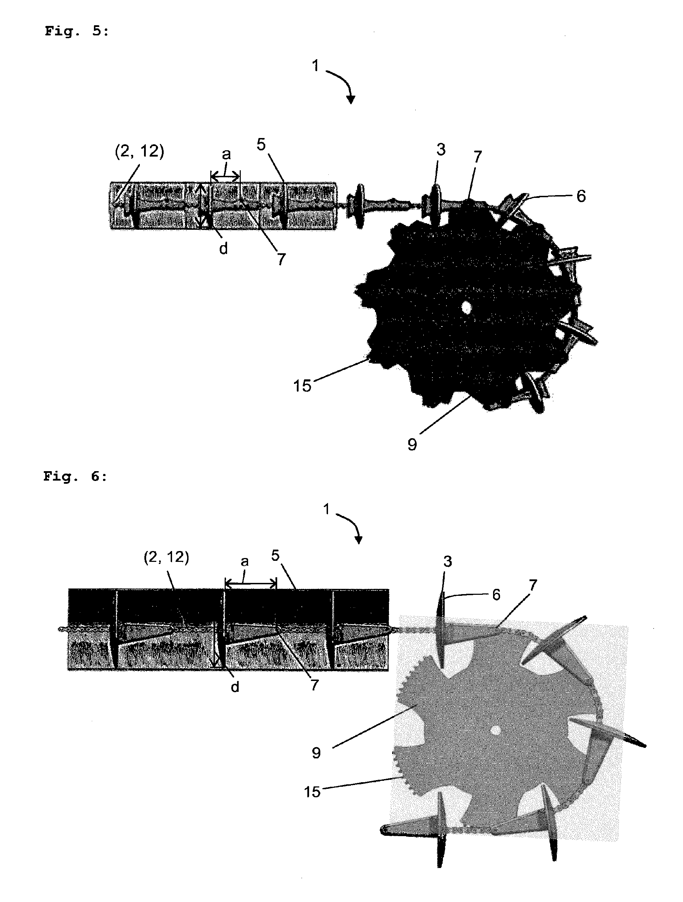

In Figur 5 ist eine Fördereinrichtung 1 gemäss Figur 4 mit einem alternativen erfindungsgemässen Zugelement 2 ausgestaltet. Vorliegend ist das Zugelement 2 als Riemen ausgestaltet.

Die Antriebseinrichtung 9 weist eine Greifeinrichtung 15 auf zum Greifen der Befestigungseinrichtung 7 zur Ausübung einer Kraft auf das Zugelement 2.

Die Mitnehmer 3 sind scheibenförmig ausgebildet mit einem Durchmesser d, d. h. der grössten Ausdehnung. Die Befestigungseinrichtung 7 ist in einem Abstand a von der Mitnehmerfläche 6 angeordnet mit einem Befestigungsabstand a von 61% der grössten Ausdehnung der Mitnehmerfläche.

In Figur 6 ist eine erfindungsgemässe Fördereinrichtung 1 in schematischer Darstellung gemäss Figur 4 gezeigt. Im Unterschied zu Figur 4 ist das Zugelement 2 als Kette ausgebildet. Ein weiterer Unterschied zur Figur 4 ist, dass die Greifeinrichtung 15 nicht die Befestigungseinrichtung 7 greift, sondern das als Kette ausgebildete Zugelement 2.

Der Befestigungsabstand a beträgt vorliegend 67% der grössten Ausdehnung d der Mitnehmerfläche 6. Die grösste Ausdehnung d entspricht dem Durchmesser der Mitnehmerfläche, die als kreisförmige Scheibe ausgebildet ist.

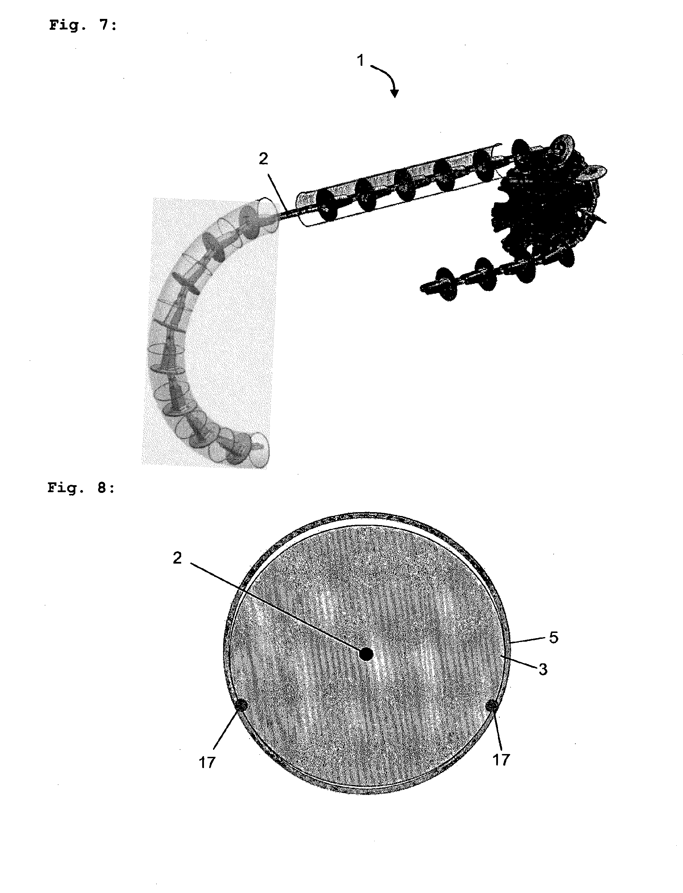

In Figur 7 ist eine alternative erfindungsgemässe Fördereinrichtung 1 in perspektivischer Darstellung gezeigt mit abschnittsweise gekrümmtem und abschnittsweise geradem Förderrohr. Das Zugelement 2 ist als Laschenkette ausgebildet.

Im Betrieb greift die Greifeinrichtung der Antriebseinrichtung in die Laschenkette ein zum Antreiben des Zugelements 2.

In Figur 8 ist schematisch ein Querschnitt durch einen Mitnehmer 3 dargestellt, der in einem Förderrohr 5 der Fördereinrichtung angeordnet ist.

Das Förderrohr 5 hat einen kreisförmigen Querschnitt und der Mitnehmer 3 im Bereich der hier nicht sichtbaren Mitnehmerfläche ebenfalls einen kreisförmigen Querschnitt, wobei der Mitnehmer 3 seitlich ausgelenkt ist. Hierdurch liegt der Mitnehmer 3 an zwei Auflagebereichen 17 der Innenwand des Förderrohrs 5 an, die in Umfangsrichtung voneinander beabstandet sind.

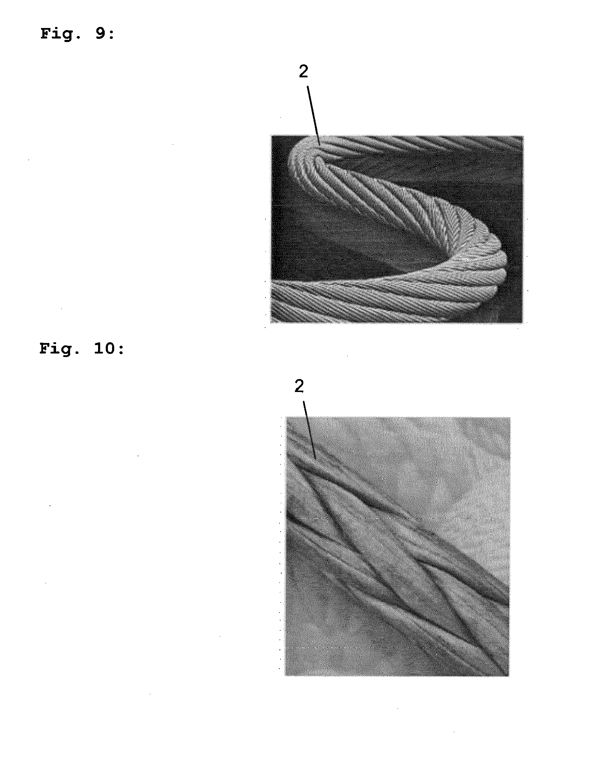

In den Figuren 9 und 10 sind ein Stahlseil (Figur 9) und ein ultrahochmolekulares Polyethylenseil (Figur 10) dargestellt, die jeweils als Zugelement 2 vorteilhaft verwendbar sind.

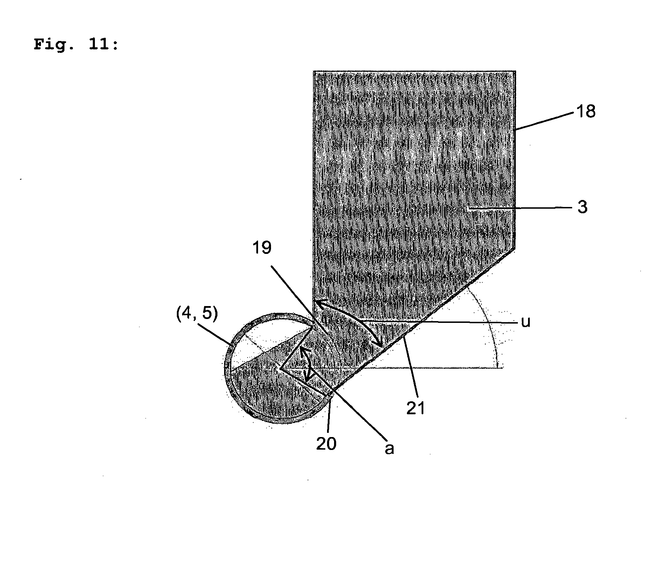

In Figur 11 ist eine erfindungsgemässe Zufuhreinrichtung 18 zur Zufuhr von Schüttgut 4 in ein Förderrohr 5 der Fördereinrichtung in einer Seitenansicht dargestellt.

Das Förderrohr 5 weist einen Einlass 10 auf, der einen Winkelbereich a von ca. 90 ° überstreicht. Mittels eines Schiebers 20, der als Drehschieber ausgebildet ist, kann der Winkelbereich a entsprechend den Anforderungen eingestellt werden.

Die Zufuhreinrichtung 18 weist einen Umlenkbereich 21 auf, der mit einem Umlenkwinkel u von ca. 50 ° bezogen auf die Schwerkraftrichtung angeordnet ist.

## Patentansprüche

1. Mitnehmer (3) zur Anordnung an einem Zugelement (2) zur Förderung von Schüttgut (4) in einer Fördereinrichtung (1) umfassend einen Förderkanal, insbesondere ein Förderrohr (5), wobei der Mitnehmer (3) eine Mitnehmerfläche (6) zur Förderung des Schüttguts (4) und eine Befestigungseinrichtung (7) zur Anordnung des Mitnehmers (3) am Zugelement (2) umfasst, wobei die Befestigungseinrichtung (7) bei bestimmungsgemässem Gebrauch des Mitnehmers (3) in Förderrichtung des Schüttguts (4) stromabwärts der Mitnehmerfläche (6) angeordnet ist, derart, dass der Mitnehmer (3) seitlich zur Förderrichtung auslenkbar ist,
wobei der Mitnehmer (3) einen Auslenkungsbegrenzer (16) aufweist, der bevorzugt auf der der Mitnehmerfläche (6) abgewandten Seite angeordnet ist,
**dadurch gekennzeichnet, dass**
der Auslenkungsbegrenzer (16) als sich entgegen der Förderrichtung öffnender Trichter ausgebildet ist, der insbesondere zumindest abschnittsweise konisch oder zumindest abschnittsweise trompetenförmig ausgebildet ist.

2. Mitnehmer (3) nach Anspruch 1, **dadurch gekennzeichnet, dass** die Mitnehmerfläche (6) bei bestimmungsgemässem Gebrauch im Wesentlichen senkrecht zur Förderrichtung des Schüttguts (4) angeordnet ist und eine grösste Ausdehnung d aufweist.

3. Mitnehmer (3) nach Anspruch 2, **dadurch gekennzeichnet, dass** die Befestigungseinrichtung (7) stromabwärts der Mitnehmerfläche (6) mit einem Befestigungsabstand a entlang des Zugelements von der Mitnehmerfläche (6) angeordnet ist bezogen auf den Schnittpunkt der mittleren Mitnehmerfläche (6) und der Zugachse des Zugelements (2), wobei der Befestigungsabstand a zumindest grösser als 25%, bevorzugt grösser als 50% und besonders bevorzugt grösser als 75% der grössten Ausdehnung d ist.

4. Mitnehmer (3) nach Anspruch 2 oder 3, **dadurch gekennzeichnet, dass** der Befestigungsabstand a kleiner als 150%, bevorzugt kleiner als 125% und besonders bevorzugt kleiner als 100% der grössten Ausdehnung d ist.

5. Mitnehmer (3) nach einem der Ansprüche 1 bis 4, **dadurch gekennzeichnet, dass** die Befestigungseinrichtung (7) derart ausgestaltet ist, dass die Befestigungseinrichtung (7) mittels einer Antriebseinrichtung (9) der Fördereinrichtung (1) greifbar ist.

6. Zugelement (2) umfassend zumindest einen Mitnehmer (3), bevorzugt zumindest zwei Mitnehmer (3), gemäss einem der vorstehenden Ansprüche, **dadurch gekennzeichnet, dass** das Zugelement (2) als Seil, Kabel, Riemen oder Kette oder beliebige Kombination daraus ausgebildet ist.

7. Zugelement (2) nach Anspruch 6, **dadurch gekennzeichnet, dass** das Zugelement (2) derart ausgestaltet ist, dass das Zugelement (2) mittels einer Antriebseinrichtung (9) einer Fördereinrichtung (1) greifbar ist.

8. Zugelement (2) nach Anspruch 6 oder 7, **dadurch gekennzeichnet, dass** Zugelement (2) als Stahlseil und/oder als Polyethylenseil, insbesondere als ultrahochmolekulares Polyethylenseil, ausgebildet ist.

9. Fördereinrichtung (1) umfassend zumindest ein Zugelement (2) gemäss einem der Ansprüche 6 bis 8 und zumindest einen Mitnehmer (3), bevorzugt zumindest zwei Mitnehmer (3), gemäss einem der Ansprüche 1 bis 5, einen Förderkanal und eine Antriebseinrichtung (9) zum Antreiben des Zugelements (2) zur Förderung von Schüttgut (4) von einem Einlass (10) zu einem Auslass (11).

10. Fördereinrichtung (1) gemäss Anspruch 9, **dadurch gekennzeichnet, dass** der Förderkanal als Hohlkörper, insbesondere als Förderrohr (5), ausgebildet ist, dass das zumindest eine Zugelement (2) mit dem zumindest einen Mitnehmer (3) im Hohlkörper angeordnet ist und mittels der Antriebseinrichtung (9) entlang einer Hohlkörperlängsachse (12) positionierbar ist.

11. Fördereinrichtung (1) gemäss Anspruch 10, **dadurch gekennzeichnet, dass** eine mittlere Mitnehmerfläche (6) des Mitnehmers (3) die mittlere Querschnittsfläche des Hohlkörpers zu kleiner 100% abdeckt, bevorzugt im Bereich von 50% bis 99,9% und besonders bevorzugt von 80 bis 99,9%, bei im Wesentlichen senkrechter Anordnung der mittleren Mitnehmerfläche (6) zur Hohlkörperlängsachse (12).

12. Fördereinrichtung (1) gemäss einem der Ansprüche 9 bis 10, **dadurch gekennzeichnet, dass** der Mitnehmer (3) derart ausgestaltet ist, dass bei bestimmungsgemässem Gebrauch zumindest in einem horizontal angeordneten Abschnitt des Förderkanals der Mitnehmer (3) an zumindest zwei in Umfangsrichtung der Mitnehmerfläche (6) voneinander beabstandeten Bereichen am Förderkanal ohne Schüttgut (4) anliegt.

13. Verfahren zur Förderung von Schüttgut (4) mittels einer Fördereinrichtung (1), insbesondere gemäss einem der Ansprüche 9 bis 12, umfassend zumindest ein Zugelement (2) gemäss einem der Ansprüche 6 bis 7 und/oder zumindest einen Mitnehmer (3) gemäss einem der Ansprüche 1 bis 5, umfassend den Schritt der Förderung des Schüttguts (4) von einem Einlass (10) zu einem Auslass (11).

14. Verfahren zum Aufrüsten und/oder Umrüsten einer Fördereinrichtung (1) zur Förderung von Schüttgut (4), umfassend den Schritt der Montage zumindest eines Mitnehmers (3) gemäss einem der Ansprüche 1 bis 5 und/oder zumindest eines Zugelements (2) gemäss einem der Ansprüche 6 bis 8, insbesondere zur Herstellung einer Fördereinrichtung (1) gemäss einem der Ansprüche 9 bis 12.

## Claims

1. A carrier (3) suitable for being positioned on a traction element (2) for conveying bulk goods (4) in a conveying device (1), comprising a conveying channel, in particular a conveying pipe (5), wherein the carrier (3) comprises a carrier surface (6) for conveying the bulk goods (4) and a securing device (7) for positioning the carrier (3) on the traction element (2), wherein the securing device (7) is positioned downstream of the carrier surface (6) in the conveying direction of the bulk goods (4) when the carrier (3) is used as intended, such that the carrier (3) can be deflected laterally in relation to the conveying direction,
wherein the carrier (3) comprises a deflection limiter (16) which is preferably arranged at the side facing away from the carrier surface (6),
**characterized in that**
the deflection limiter (16) is designed as a funnel opening in a direction opposite the conveying direction, which is particularly at least in part conically or at least in part trumpet-like shaped.

2. The carrier (3) according to claim 1, **characterized in that** the carrier surface (6) is arranged essentially perpendicular to the conveying direction of the bulk goods (4) when used as intended, and comprises a largest extension d.

3. The carrier (3) according to claim 2, **characterized in that** the securing device (7) is arranged downstream of the carrier surface (6) at a fixing distance a along the traction element of the carrier surface (6) in relation to the intersection of the medium carrier surface (6) and the towing axle of the traction element (2), wherein the fixing distance a is at least greater than 25%, preferably greater than 50% and particularly preferably greater than 75% of the largest extension d.

4. The carrier (3) according to claim 2 or 3, **characterized in that** the fixing distance a is smaller than 150%, preferably smaller than 125% and particularly preferably smaller than 100% of the largest extension d.

5. The carrier (3) according to any of claims 1 to 4, **characterized in that** the securing device (7) is configured such that the securing device (7) is tangible by a drive means (9) of the conveying device (1).

6. Traction element (2) comprising at least a carrier (3), preferably at least two carriers (3), according to any of the preceding claims, **characterized in that** the traction element (2) is designed as rope, cable, belt or chain or any combination thereof.

7. The traction element (2) according to claim 6, **characterized in that** the traction element (2) is configured such that the traction element (2) is tangible by a drive means (9) of a conveying device (1).

8. The traction element (2) according to claim 6 or 7, **characterized in that** the traction element (2) is designed as steel cable and/or as polyethylene cable, in particular as ultrahigh-molecular polyethylene cable.

9. A conveying device (1) comprising at least a traction element (2) according to any of claims 6 to 8 and at least a carrier (3), preferably at least two carriers (3), according to any of claims 1 to 5, a conveying channel and a drive means (9) for driving the traction element (2) for conveying bulk goods (4) from an inlet (10) to an outlet (11).

10. The conveying device (1) according to claim 9, **characterized in that** the conveying channel is formed as hollow body, in particular as conveying pipe (5), **in that** the at least one traction element (2) is arranged in the hollow body with the at least one carrier (3) and can be positioned along a hollow body longitudinal axis (12) by means of the drive means (9).

11. The conveying device (1) according to claim 10, **characterized in that** a medium carrier surface (6) of the carrier (3) covers the medium cross-sectional area of the hollow body for less than 100%, preferably in the range from 50% to 99.9% and particularly preferably from 80 to 99.9%, when the medium carrier surface (6) is arranged basically perpendicularly to the hollow body longitudinal axis (12).

12. The conveying device (1) according to any of claims 9 to 10, **characterized in that** the carrier (3) is designed such that, when used as intended, at least in a horizontal section of the conveying channel, the carrier (3) abuts on at least two areas of the conveying channel without bulk goods (4) spaced from one another in circumferential direction of the carrier surface (6).

13. A method for conveying bulk goods (4) by means of a conveying device (1), in particular according to any of claims 9 to 12, comprising at least a traction element (2) according to any of claims 6 to 7 and/or at least a carrier (3) according to any of claims 1 to 5, comprising the step of conveying the bulk goods (4) from an inlet (10) to an outlet (11).

14. A method for upgrading and/or converting a conveying device (1) for conveying bulk goods (4), comprising the step of assembling at least one carrier (3) according to any of claims 1 to 5 and/or at least a traction element (2) according to any of claims 6 to 8, in particular for producing a conveying device (1) according to any of claims 9 to 12.

## Revendications

1. Entraîneur (3) à disposer sur un élément de traction (2) pour le convoyage d'un produit en vrac (4) dans un dispositif de transport (1) comprenant un canal de transport, en particulier une conduite de transport (5), ledit entraîneur (3) comportant une surface d'entraînement (6) pour le transport du produit en vrac (4) et un dispositif de fixation (7) pour la mise en place de l'entraîneur (3) sur l'élément de traction (2), le dispositif de fixation (7) étant disposé en aval de la surface d'entraînement (6) dans la direction de transport du produit en vrac (4) en cas d'usage conforme de l'entraîneur (3), de manière à permettre une déviation latérale de l'entraîneur (3) par rapport à la direction de transport,
ledit entraîneur (3) comportant un limiteur de déviation (16), lequel est préférentiellement disposé de l'autre côté par rapport à la surface d'entraînement (6),
**caractérisé en ce que** le limiteur de déviation (16) est réalisé comme un entonnoir s'ouvrant dans la direction opposée à la direction de transport, lequel est notamment au moins partiellement conique ou au moins partiellement en forme de trompette.

2. Entraîneur (3) selon la revendication 1, **caractérisé en ce que** la surface d'entraînement (6) est en cas d'usage conforme sensiblement perpendiculaire à la direction de transport du produit en vrac (4) et présente une extension maximale d.

3. Entraîneur (3) selon la revendication 2, **caractérisé en ce que** le dispositif de fixation (7) est disposé en aval de la surface d'entraînement (6) le long de l'élément de traction avec un intervalle de fixation a à la surface d'entraînement (6), par rapport au point d'intersection entre la surface d'entraînement (6) médiane et l'axe de traction de l'élément de traction (2), l'intervalle de fixation a étant au moins supérieur à 25 %, préférentiellement supérieur à 50 % et tout particulièrement supérieur à 75 % de l'extension maximale d.

4. Entraîneur (3) selon la revendication 2 ou la revendication 3, **caractérisé en ce que** l'intervalle de fixation a est inférieur à 150 %, préférentiellement inférieur à 125 % et tout particulièrement inférieur à 100 % de l'extension maximale d.

5. Entraîneur (3) selon l'une des revendications 1 à 4, **caractérisé en ce que** le dispositif de fixation (7) est configuré de manière à permettre la saisie du dispositif de fixation (7) par un dispositif d'entraînement (9) du dispositif de transport (1).

6. Elément de traction (2) comprenant au moins un entraîneur (3), préférentiellement au moins deux entraîneurs (3) selon l'une des revendications précédentes, **caractérisé en ce que** l'élément de traction (2) est réalisé sous forme de cordon, de câble, de courroie ou de chaîne, ou d'une combinaison quelconque de ceux-ci.

7. Elément de traction (2) selon la revendication 6, **caractérisé en ce que** ledit élément de traction (2) est configuré de manière à permettre la saisie de l'élément de traction (2) par un dispositif d'entraînement (9) d'un dispositif de transport (1).

8. Elément de traction (2) selon la revendication 6 ou la revendication 7, **caractérisé en ce que** ledit élément de traction (2) est réalisé sous forme de câble d'acier et/ou de câble en polyéthylène, en particulier en polyéthylène à très haute densité moléculaire.

9. Dispositif de transport (1) comprenant au moins un élément de traction (2) selon l'une des revendications 6 à 8 et au moins un entraîneur (3), préférentiellement au moins deux entraîneurs (3) selon l'une des revendications 1 à 5, un canal de transport et un dispositif d'entraînement (9) pour l'entraînement de l'élément de traction (2), afin de transporter un produit en vrac (4) d'une entrée (10) vers une sortie (11).

10. Dispositif de transport (1) selon la revendication 9, **caractérisé en ce que** le canal de transport est réalisé comme corps creux, en particulier comme conduite de transport (5), **en ce que** le ou les éléments de traction (2) sont disposés dans le corps creux avec le ou les entraîneurs (3) et sont positionnables le long d'un axe longitudinal (12) de corps creux au moyen du dispositif d'entraînement (9).

11. Dispositif de transport (1) selon la revendication 10, **caractérisé en ce qu'**une surface d'entraînement (6) médiane de l'entraîneur (3) couvre moins de 100 %, préférentiellement entre 50% et 99,9% et tout particulièrement entre 80 et 99,9% de la surface de section transversale médiane du corps creux pour une disposition sensiblement perpendiculaire de la surface d'entraînement (6) médiane par rapport à l'axe longitudinal (12) du corps creux.

12. Dispositif de transport (1) selon la revendication 9 ou la revendication 10, **caractérisé en ce que** ledit entraîneur (3) est réalisé de telle manière qu'en cas d'usage conforme, l'entraîneur (3) repose contre au moins deux zones sans produit en vrac (4), espacées l'une de l'autre dans la direction périphérique de la surface d'entraînement (6) sur le canal de transport, au moins dans une partie horizontale du canal de transport.

13. Procédé de transport d'un produit en vrac (4) au moyen d'un dispositif de transport (1), en particulier selon l'une des revendications 9 à 12, comprenant au moins un élément de traction (2) selon la revendication 6 ou la revendication 7 et/ou au moins un entraîneur (3) selon l'une des revendications 1 à 5, comprenant l'étape de transport du produit en vrac (4) d'une entrée (10) vers une sortie (11).

14. Procédé d'équipement et/ou de rééquipement d'un dispositif de transport (1) pour le convoyage de produits en vrac (4), comprenant l'étape de montage d'au moins un entraîneur (3) selon l'une des revendications 1 à 5 et/ou d'au moins un élément de tractions (2) selon l'une des revendications 6 à 8, en particulier pour la fabrication d'un dispositif de transport (1) selon l'une des revendications 9 à 12.
